# FASCICULE DE BREVET EUROPEEN

(11) **EP 4 217 137 B1**
(45) Date de publication et mention de la délivrance du brevet: **24.09.2025**
(21) Numéro de dépôt: 21798072.1
(22) Date de dépôt: 24.09.2021
(51) Int. Cl.: B22F 12/50, B29C 64/321, B65H 54/02, B22F 10/18, B33Y 30/00, B33Y 40/00

(54) **PROCÉDÉ D'ENROULAGE D'UN FILAMENT POUR DISPOSITIF DE FABRICATION ADDITIVE**
VERFAHREN ZUM WICKELN EINES FILAMENTS FÜR EINE VORRICHTUNG ZUR GENERATIVEN FERTIGUNG
METHOD FOR WINDING A FILAMENT FOR AN ADDITIVE MANUFACTURING DEVICE

(30) Priorité: 25.09.2020 FR 2009798
(43) Date de publication de la demande: 02.08.2023
(73) Titulaire: Ecole Nationale Supérieure d'Arts et Métiers (ENSAM), 75013 Paris (FR); SAFRAN, 75015 Paris (FR); Centre National de la Recherche Scientifique, 75794 Paris Cedex 16 (FR); Conservatoire National des Arts et Métiers, 75141 Paris Cedex 03 (FR)
(72) Inventeur: THEZE, Alexis, 77550 MOISSY-CRAMAYEL (FR); GUINAULT, Alain, 77124 CREGY LES MEAUX (FR); REGNIER, Gilles, 94240 L HAY-LES-ROSES (FR)
(74) Mandataire: Ernest Gutmann - Yves Plasseraud S.A.S.
(86) Numéro de dépôt international: PCT/FR2021/051653
(87) Numéro de publication internationale: WO 2022/064158

(56) Documents cités:
- WO-A1-2018/106733
- KR-B1- 101 533 998

## Description

### Domaine technique de l'invention

Le présent document concerne un procédé d'enroulage d'un filament à haut taux de charge en poudre métallique. Ce filament est destiné à un dispositif de fabrication additive.

### Etat de la technique antérieure

Lors de la réalisation de pièces par fabrication additive, un filament est fondu et se solidifie afin de réaliser couche par couche lesdites pièces. Le stockage du filament consommable est réalisé autour d'une bobine.

Classiquement dans un procédé de dépôt de filament fondu aussi appelé « Fused Filament Fabrication » (FFF), on utilise des filaments comprenant un liant comportant des polymères tels que l'acide polylactique (PLA), acrylonitrile butadiène styrène (ABS), polycarbonate, nylon, polyéthylène téréphtalate glycolisé (PETG), etc. Ces filaments sont généralement non chargés en poudre métallique. Il arrive qu'ils soient légèrement chargés, comme les fibres de carbone par exemple, pour renforcer les propriétés finales de la pièce. Dans le cas de la fabrication additive de pièces métal via le procédé FFF, le filament atteint un taux de charge en poudre métallique extrêmement élevé car il est destiné à produire une pièce composite appelée « pièce verte ». Cette pièce va subir plusieurs opérations post-impression afin de retirer la partie polymère de la pièce et la densifier pour finalement obtenir une pièce entièrement métallique.

Le procédé FFF comprend généralement une quantité supérieure ou égale à 80% et préférablement entre 85 et 91% en masse de poudre métallique. Les filaments ont typiquement un diamètre compris entre 1,5 et 5mm et préférablement entre 1,65 et 1,85mm. Ce procédé est très similaire à un procédé de moulage par injection de poudre métallique, aussi appelé « Metal Injection Molding » (MIM). La différence entre le procédé FFF et le procédé MIM est que dans le procédé FFF, la pièce est imprimée et non injectée au moyen d'une presse et d'un moule comme dans le procédé MIM.

Il est important de comprendre le procédé MIM dans sa globalité afin de comprendre la nécessité et l'importance, dans le procédé FFF, d'avoir un filament avec une quantité supérieure ou égale à 80% en masse de poudre métallique.

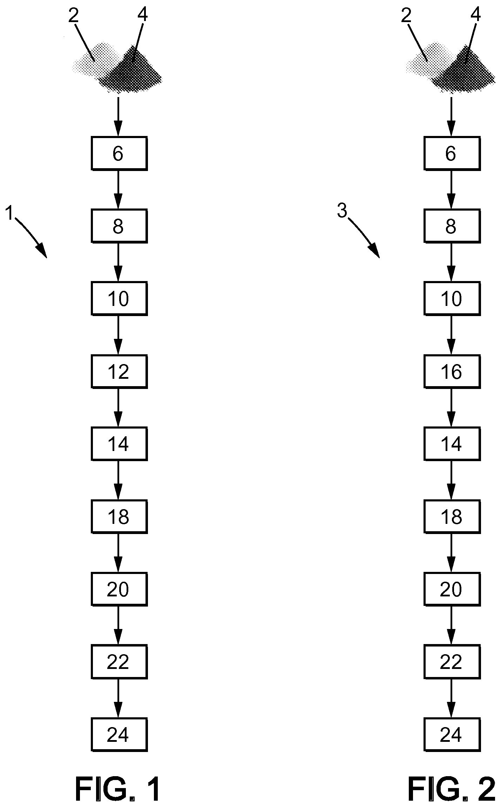

La figure 1 illustre classiquement le procédé MIM 1. Dans ce procédé MIM 1, le liant 2 et la poudre métallique 4 sont mélangés dans un mélangeur 6, puis le tout est extrudé dans une extrudeuse 8. Un filament 10 est obtenu et est injecté avec une presse 12. Une pièce verte 14 est obtenue.

La figure 2 illustre le procédé FFF 3. Dans ce procédé FFF 3, un filament 10 est obtenu de la même manière que dans le procédé MIM 1. Cependant, dans le procédé FFF 3 le filament 10 ne passe pas par une presse 12 mais une pièce verte 14 est imprimée au moyen d'une imprimante 3D 16 dans laquelle est chargé un filament 10 chargé en poudre métallique.

Ensuite, aussi bien dans le procédé MIM 1 illustré en figure 1 que dans le procédé FFF 3 illustré en figure 2, la pièce verte 14 passe dans un premier four de déliantage 18. Comme son nom l'indique cette première opération va retirer le liant polymère. Dans cette étape, on retire la partie polymère contenue dans la pièce. A la fin de cette étape, la pièce déliantée 20 est presque exclusivement constituée de poudre métallique. Il reste juste un peu de liant entre les grains de poudre pour tenir la pièce. Si on enlevait tout le liant à cette étape, la pièce s'effondrerait. A la fin de cette étape intervient le frittage 22. On parle à ce stade de pièce brune ou marron 24.Une fois 90% du liant évacué, la pièce fragile et poreuse passe dans un second four de frittage qui va densifier la pièce. A la fin de cette étape de frittage, la pièce sera entièrement métallique et les porosités laissées par l'évacuation du liant lors de l'étape de déliantage vont presque totalement disparaitre. La contrepartie est que le volume de la pièce va diminuer. Ainsi plus la part de liant est importante dans la pièce verte, plus la variation de volume finale de la pièce sera importante. C'est pour cette raison qu'on cherche à imprimer ou injecter une pièce avec la teneur en métal la plus élevée pour minimiser les variations de volume et prédire plus facilement la géométrie finale de la pièce. Globalement le retrait est isotrope sur les 3 axes.

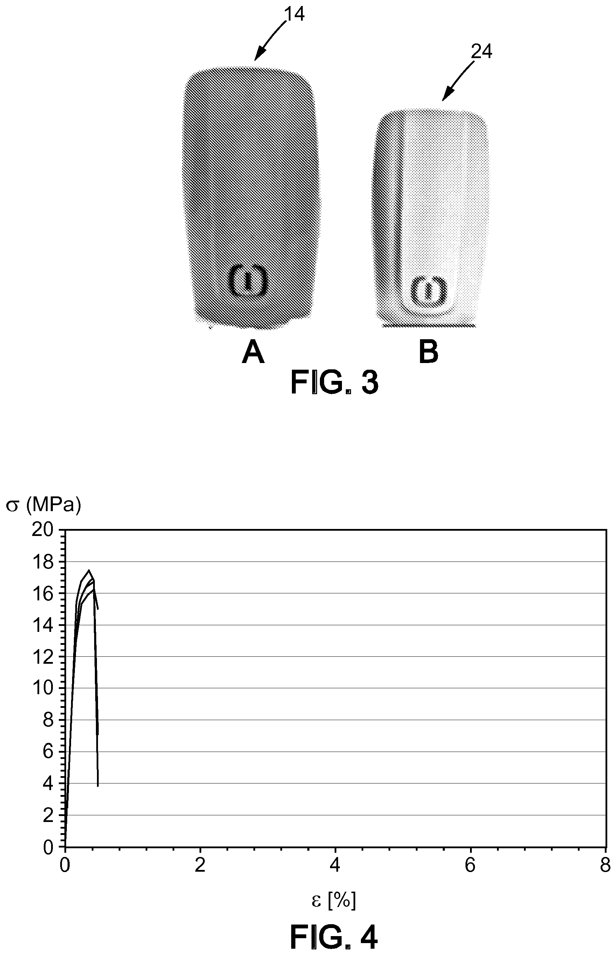

Ainsi, la figure 3 illustre une variation de volume entre une pièce verte 14 en figure 3A et une pièce frittée ou pièce brune 24 en figure 3B. Plus le taux de charge en poudre métallique est élevé moins la variation de volume sera important. Mais un haut taux de charge en poudre métallique rend le filament très fragile.

La figure 4 illustre l'évolution de la contrainte de flexion σ en Méga Pascal (MPa) en fonction du taux de déformation ε.

Des essais de flexion trois points sur un tel filament à haut taux de charge en poudre métallique montrent qu'à température ambiante, c'est-à-dire à une température comprise entre 18 et 22°C, l'élasticité du filament est très faible et inférieure ou égale à 1%.

A partir de la figure 4, on constate que la contrainte de flexion σ augmente rapidement jusqu'à atteindre 17 MPa pour un taux de déformation de 0,4%. Puis, pour une déformation supérieure à 0,4%, la contrainte de flexion σ chute subitement indiquant une cassure dudit filament.

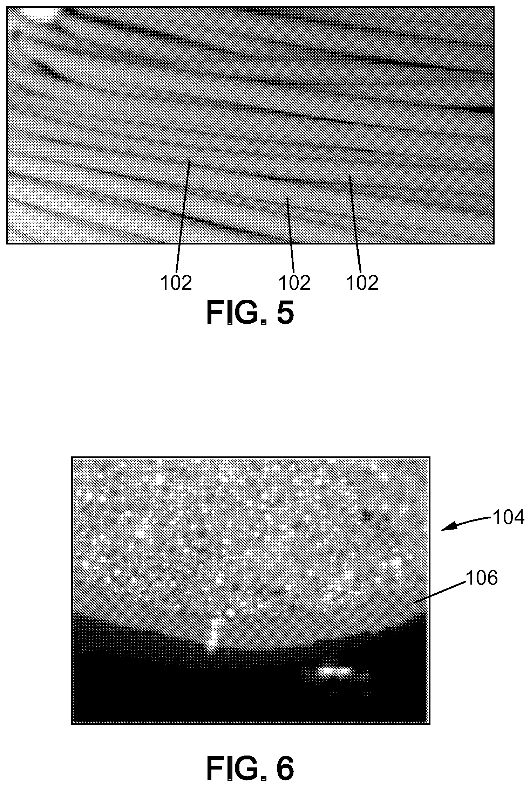

Dans de telles conditions, comme illustré en figure 5, le filament est particulièrement cassant à température ambiante. Il devient alors impossible d'enrouler et dérouler le filament sur une bobine d'un dispositif de fabrication additive sans risque de fissures 102 ou de cassure du filament. Une cassure du filament ou une fissuration du filament lors de l'enroulement dudit filament autour de la bobine est le rend inutilisable. En effet, dans le procédé FFF, la tête d'impression et le système d'entrainement ont besoin d'un filament continue et de section constante pour garantir un débit régulier.

Pour pallier à cette difficulté, il est connu de protéger ledit filament 104 en disposant une peau de polymère 106 autour du filament comme illustré en figure 6. L'ajout de cette peau de polymère 106 de 50 µm d'épaisseur autour du filament 104 permet d'atteindre le rayon de courbure nécessaire à son enroulage et facilite l'impression du matériau car elle le rend moins cassant et moins visqueux. Toutefois, cette solution augmente la teneur en matrice dans le filament 4 ce qui induit d'autres difficultés telles que l'augmentation des contraintes résiduelles dans la pièce formée à partir d'un tel filament. Une proportion de liant plus élevée entraine plus de retrait et le rend moins prévisible. La présence d'une peau de polymère autour du filament peut provoquer une répartition inégale de la poudre et du liant dans la pièce.

Il est donc important d'apporter une solution technique ne modifiant pas la constitution du filament et garantissant son intégrité, c'est-à-dire qu'aucune fissure ni cassure ne soit présent dans ce filament.

Les documents WO2018106733 et KR101533998 sont considérés comme des arts antérieurs.

### Présentation de l'invention

Le présent document concerne un procédé d'enroulage d'un filament pour dispositif de fabrication additive comprenant les étapes :
- fournir un filament chargé au moins à 80% en masse en poudre métallique ;
- chauffer ledit filament jusqu'à une température d'au moins 70°C et maintenir ledit filament à ladite température ;
- enrouler ledit filament autour de l'axe d'une bobine, préférentiellement métallique, le diamètre de la bobine étant à vide supérieur ou égal à un diamètre de 120mm.

En se plaçant dans de telles conditions, il devient possible d'enrouler le filament sans générer de cassure ou de fissure dudit filament. Cela permet de se placer dans des conditions d'élasticité favorable. En outre, la bobine étant préférentiellement en métal, cela évite qu'elle se déforme avec la chaleur.

Ledit diamètre de la bobine peut être compris entre100 et 140 mm, préférentiellement entre 120 et 140 mm.

Ledit filament peut être chauffé à une température comprise entre 70 et 140°C, préférentiellement entre 70 et 90°C.

Le présent document concerne une installation d'enroulement d'un filament sur une bobine pour dispositif de fabrication additive comprenant :
- une extrudeuse à filament ;
- des moyens d'étirement ;
- des moyens de chauffage dudit filament à une température d'au moins 70°C ;
- des moyens d'entraînement ;
- des moyens d'enroulement dudit filament autour de la bobine, préférentiellement métallique, dont le diamètre de la bobine à vide est supérieur ou égal à un diamètre de 100 mm.

Les moyens de chauffage peuvent intervenir entre les moyens d'étirement et le bobinage. Les moyens d'étirement peuvent comporter un tapis de tirage.

Les moyens de chauffage dudit filament peuvent comprendre des moyens de soufflage d'air à ladite température.

Les moyens de chauffage dudit filament peuvent comporter un moyen de chauffage par infrarouge.

Les moyens d'entraînements peuvent comporter au moins un galet d'entraînement.

### Brève description des figures

[Fig. 1] représente un procédé de moulage par injection de poudre métallique, aussi appelé « Metal Injection Molding » (MIM) ;
[Fig. 2] représente un procédé de dépôt de filament fondu, aussi appelé « Fused Filament Fabrication » (FFF) ;
[Fig. 3] représente une variation de volume entre une pièce verte en figure 3A et une pièce frittée en figure 3B.
[Fig. 4] représente un essai de flexion à trois points sur un filament à température ambiante et plus précisément l'évolution de la contrainte de flexion σ dudit filament en Méga Pascal (MPa) en fonction du taux de déformation ε ;
[Fig. 5] représente un exemple de filament endommagé et comprenant des fissures ;
[Fig. 6] représente un filament entouré d'une peau de polymère ;
[Fig. 7] représente un dispositif d'extrusion ou ligne d'extrusion industrielle d'un filament selon l'invention ;
[Fig. 8] représente en figure 8A une bobine selon l'invention et en figure 8B une bobine classique.
[Fig. 9] représente l'évolution du module élastique G' en fonction de la température T pour un filament lors d'essais d'analyse thermomécanique dynamique (DMTA) selon l'invention ;
[Fig. 10] représente des essais de flexion à trois points sur un filament à une température T de 80°C et plus précisément l'évolution de la contrainte de flexion σ dudit filament en Méga Pascal (MPa) en fonction du taux de déformation ε selon l'invention ;
[Fig. 11] représente en figure 11A l'évolution de la contrainte de flexion σ dudit filament en Méga Pascal (MPa) en fonction du taux de déformation ε et en figure 11B, l'évolution du rayon de courbure R minimal en millimètre (mm) du rouleau central de la bobine tel que le filament ne soit pas endommagé en fonction du taux de déformation ε selon l'invention ;
[Fig. 12] représente un schéma illustrant l'obtention d'un rayon de courbure en fonction d'une déformation lors d'un essai de flexion trois points.

### Description détaillée de l'invention

Le présent document se place dans le contexte d'un dispositif de fabrication additive permettant de construire une pièce couche par couche, par dépôt d'un filament fondu qui se solidifie en refroidissant.

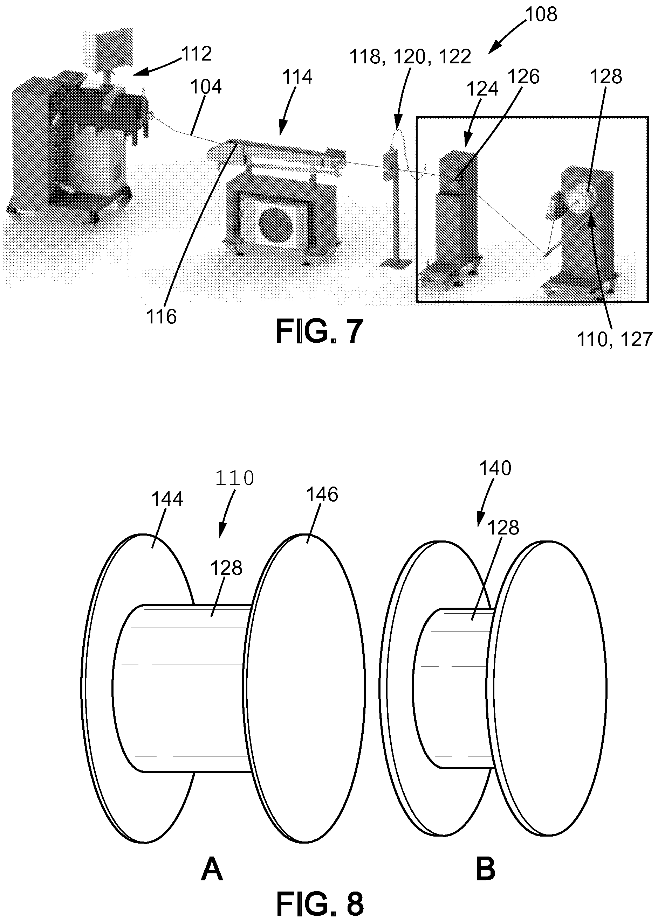

La figure 7 illustre une installation d'extrusion 108 d'un filament 104 et d'enroulement sur une bobine 110 pour une utilisation ultérieure dans un dispositif de fabrication additive.

Dans une telle installation, le filament 104 est produit au moyen d'une extrudeuse 112. Ce filament 104 présente un diamètre compris entre 1,5 et 5mm. Il comprend entre un et trois polymères et est chargé en poudre métallique à au moins 80% en masse.

Le filament 104 est ensuite étiré par des moyens d'étirement 114. Ces moyens d'étirement 114 comprennent un tapis de tirage 116. Le filament 104 est alors chauffé par des moyens de chauffage 118 à une température d'au moins 80°C. Ces moyens de chauffage 118 comprennent des moyens de chauffage d'air à ladite température 120 et/ou un moyen de chauffage par infrarouge 122. Le filament 104 est ainsi chauffé et maintenu à ladite température : un des composés du liant est maintenu à l'état fondu pour ramollir le filament. Le filament est ensuite entraîné par des moyens d'entraînement 124 vers une bobine 110. Ces moyens d'entraînement comprennent au moins un galet d'entraînement 126.

Le filament 104 est alors enroulé par des moyens d'enroulements 127 autour d'une bobine 110. Cette bobine comporte un rouleau central 128 ou partie cylindrique à base circulaire autour duquel s'entoure le filament. Le rouleau central 128 comporte un périmètre extérieur de sa base qui s'inscrit dans un cercle de sorte que ce rouleau central 128 peut être une partie cylindrique à base polygonale. Ce rouleau central 128 présente un diamètre supérieur ou égal à 100 mm, de préférence compris entre 100 et 140mm, encore plus préférentiellement entre 120 et 140mm.

La figure 8 illustre une comparaison entre une bobine classique 140 en figure 8B et une bobine 110 utilisée pour enrouler le filament chargé en poudre métallique selon l'invention en figure 8A. Le diamètre du rouleau central 128 est de 120mm sur la bobine 110 selon l'invention qui est de préférence en métal et qui est illustrée en figure 8A alors que le diamètre du rouleau central 128 est inférieur pour la bobine classique 140 en figure 8B. La bobine 110 selon l'invention comporte un premier rebord cylindrique 144 et un second rebord cylindrique 146 qui ont chacun un diamètre supérieur à celui du rouleau central 128.

En fonctionnement, le filament de par ces propriétés élastiques peut être enroulé sans se casser, ni se fissurer à partir d'une température d'au moins 70°C, préférablement entre 70 et 90°C. Une fois enroulé à chaud, en se refroidissant, le filament garde la forme de l'enroulement. Pour le dérouler sans le casser ou le fissurer, il est nécessaire de chauffer le filament de nouveau jusqu'à une température d'au moins 70°C, préférentiellement comprise entre 70 et 140°C, encore plus préférablement entre 70 et 90°C.

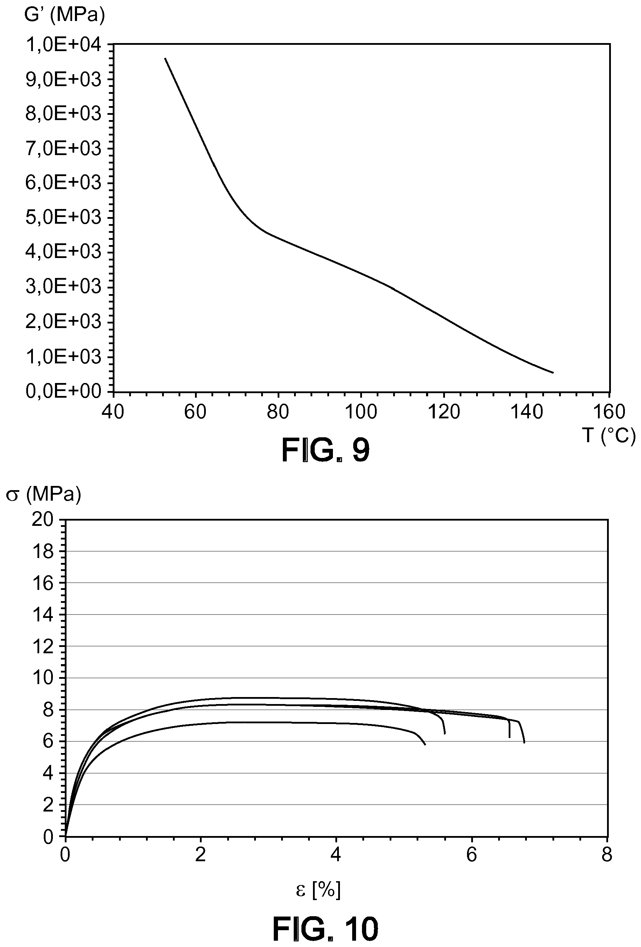

La figure 9 illustre l'évolution du module élastique G' en Méga Pascal (MPa) dudit filament en fonction de la température T lors d'un essai d'analyse thermomécanique dynamique, aussi appelé DMTA. Ce module élastique G' renseigne sur la rigidité et la composante élastique du matériau. Le module élastique G' a une valeur de 9,5×10³ MPa pour une température d'environ 50°C et décroit au fur et à mesure que la température augmente. Un ramollissement intervient à des températures comprises entre 80 et 140°C conférant audit filament les propriétés nécessaires à un enroulement sans cassure, ni fissure autour de la bobine. A une température T de 80°C, le module élastique G' chute à 4,4×10³ MPa et à moins de 10³ MPa à une température T de 140°C.

La figure 10 illustre les essais de flexion trois points réalisés sur ledit filament à une température de 80°C et plus précisément cette figure 10 montre l'évolution de la contrainte de flexion σ en Méga Pascal (MPa) en fonction du taux de déformation ε. Quatre courbes sont présentées correspondant aux mêmes essais réalisés à quatre reprises. Contrairement aux résultats d'essais de flexion trois points réalisés à température ambiante en figure 4, la contrainte de flexion σ est ici plus faible. Un plateau est atteint à partir d'environ 1% de taux de déformation pour lequel la contrainte de flexion σ est comprise entre 7 et 9 MPa. Ainsi, même à des taux de déformation de 5%, il n'y a pas de rupture, cassure du filament en réponse à ces sollicitations.

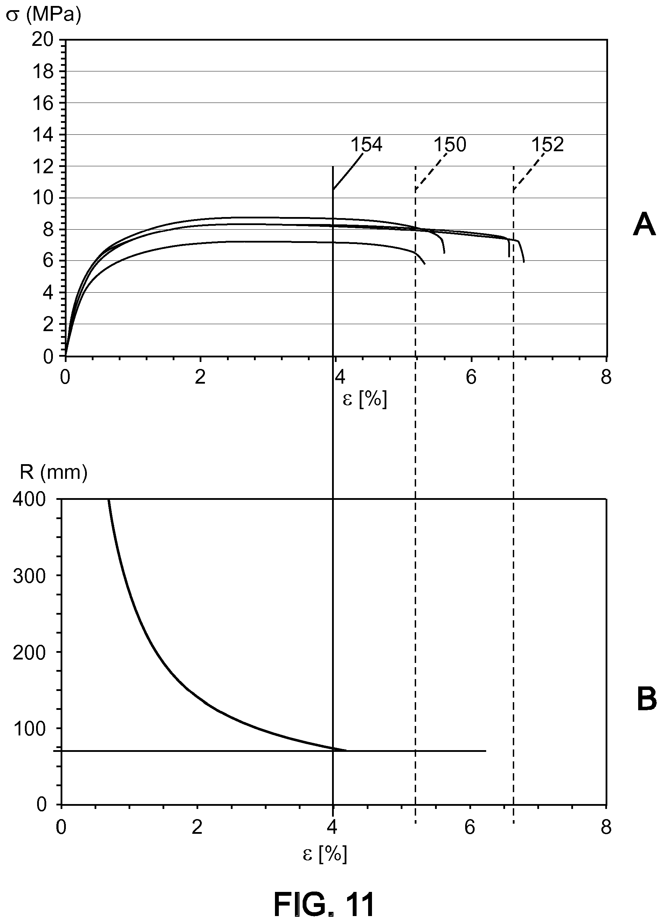

A partir des résultats des essais de flexion trois points illustrés en figure 9, il est possible de déterminer un rayon de courbure R minimal que peut accepter le filament avant une rupture pour une température donnée et en l'occurrence pour une température de 80°C. Cela est illustré en figure 11.

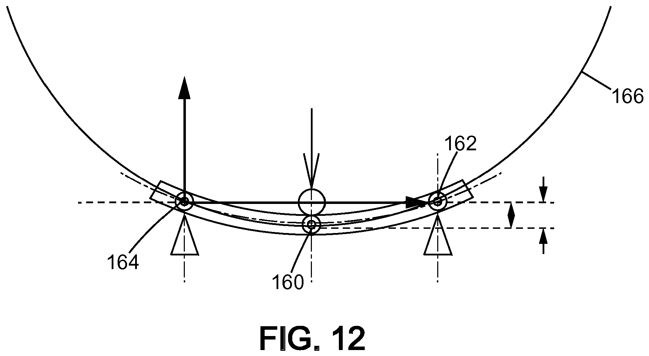

La figure 11B illustre le rayon de courbure R du rouleau central de la bobine en millimètre (mm) en fonction du taux de déformation ε. La figure 11B est obtenue connaissant la position de trois points rouges comme cela est illustré en figure 12 lors de l'essai de flexion trois points. Une machine enregistre un déplacement du point central 160 et deux autres points d'appui 162, 164 restent à une position fixe. Il est ainsi possible de déterminer le rayon de courbure R d'une pièce illustré par une courbe 166 pendant l'essai de flexion trois points via un petit calcul géométrique grâce aux positions des trois points 160, 162, 164 et ce en fonction du déplacement du point central.

Dans la mesure où ces déplacements et des contraintes sont enregistrés tout au long de l'essai de flexion trois point, il est donc possible d'exprimer le rayon de courbure R grâce au déplacement du point central en fonction de la contrainte dans la pièce. Enfin on peut tracer pour chaque position du point central qui correspond donc à un rayon de courbure R une courbe exprimant le rayon de courbure R en fonction du taux de déformation ε et ainsi déterminer le rayon de courbure R maximal accepté par le filament, comme l'illustre la figure 10B.

A partir des calculs réalisés, il a ainsi été déduit un taux de déformation ε critique à ne pas dépasser pour ne pas endommager le filament. Cette déformation critique est comprise entre 2 et 4% et est préférentiellement inférieur à 4%. La figure 11A correspond à la figure 6 et permet de faire le lien avec la figure 11B. Comme illustré en figure 11B, une rupture du filament intervient entre 5.5 et 6.5% comme l'indique les deux droites en pointillées 150, 152. Le graphique de la figure 11B montre que plus le taux de déformation ε est grand, plus le rayon de courbure R minimal à ne pas dépasser pour ne pas endommager ledit filament est faible. Dans les conditions précitées, c'est-à-dire avec un taux de déformations inférieur à 4% comme l'indique la droite limite 154, le diamètre minimal du rouleau central de la bobine est compris entre 100 et 140 mm et préférentiellement supérieur ou égal à 120 mm.

## Revendications

1. Procédé d'enroulage d'un filament (4) pour dispositif de fabrication additive comprenant les étapes :
fournir un filament (4) chargé au moins à 80% en masse en poudre métallique ;
- chauffer ledit filament (4) jusqu'à une température d'au moins 70°C et maintenir ledit filament (4) à ladite température ;
- enrouler ledit filament (4) autour de l'axe d'une bobine (110), préférentiellement métallique, le diamètre de la bobine (110) étant à vide supérieur ou égal à un diamètre de 100 mm.

2. Procédé d'enroulage d'un filament (4) selon la revendication 1, dans lequel ledit diamètre de la bobine est compris entre 100 et 140 mm, préférentiellement entre 120 et 140mm.

3. Procédé d'enroulage d'un filament selon l'une des revendications précédentes, dans lequel ledit filament (4) est chauffé à une température comprise entre 70 et 140°C, préférentiellement entre 70 et 90°C.

4. Installation d'enroulement (8) d'un filament (4) sur une bobine (110) pour dispositif de fabrication additive comprenant :
- une extrudeuse (12) à filament (4) ;
- des moyens d'étirement (14) ;
- des moyens de chauffage (18) et de maintien dudit filament (4) à une température d'au moins 70°C ;
- des moyens d'entraînement (24);
- des moyens d'enroulement (27) dudit filament (4) autour de la bobine (110), préférentiellement métallique, dont le diamètre de la bobine (110) à vide est supérieur ou égal à un diamètre de 100 mm.

5. Installation d'enroulement d'un filament (4) sur une bobine (110) selon la revendication 4, dans lequel les moyens de chauffage (18) et de maintien dudit filament à une température d'au moins 70°C interviennent entre les moyens d'étirement (14) et les moyens d'enroulement (27).

6. Installation d'enroulement d'un filament sur une bobine selon la revendication 4 ou 5, dans lequel les moyens d'étirement (14) comportent un tapis de tirage (14).

7. Installation d'enroulement d'un filament sur une bobine selon l'une des revendications 4 à 6, dans lequel les moyens de chauffage (18) dudit filament comprennent des moyens de soufflage d'air à ladite température (20).

8. Installation d'enroulement d'un filament sur une bobine selon l'une des revendications 4 à 7, dans lequel les moyens de chauffage (18) dudit filament comportent un moyen de chauffage par infrarouge (22).

9. Installation d'enroulement d'un filament sur une bobine selon l'une des revendications 4 à 8, dans lequel les moyens d'entraînements (24) comportent au moins un galet d'entraînement (26).

## Patentansprüche

1. Verfahren zum Wickeln eines Filaments (4) für eine Vorrichtung zur additiven Fertigung, umfassend die folgenden Schritte:
- Bereitstellen eines Filaments (4), das zu mindestens 80 Massen-% Metallpulver enthält;
- Erhitzen des Filaments (4) auf eine Temperatur von mindestens 70 °C und Halten des Filaments (4) auf dieser Temperatur;
- Wickeln des Filaments (4) um die Achse einer Spule (110), vorzugsweise einer Metallspule, wobei der Durchmesser der Spule (110) im Leerzustand größer oder gleich 100 mm ist.

2. Verfahren zum Wickeln eines Filaments (4) nach Anspruch 1,
wobei der Durchmesser der Spule zwischen 100 und 140 mm, vorzugsweise zwischen 120 und 140 mm, liegt.

3. Verfahren zum Wickeln eines Filaments nach einem der vorhergehenden Ansprüche,
wobei das Filament (4) auf eine Temperatur zwischen 70 und 140 °C, vorzugsweise zwischen 70 und 90 °C, erhitzt wird.

4. Anlage (8) zum Aufwickeln eines Filaments (4) auf eine Spule (110) für eine Vorrichtung zur additiven Fertigung, umfassend:
- einen Filamentextruder (12) für das Filament (4);
- eine Streckeinrichtung (14);
- eine Einrichtung (18) zum Erhitzen und Halten des Filaments (4) auf einer Temperatur von mindestens 70 °C;
- eine Antriebseinrichtung (24);
- eine Wickeleinrichtung (27) zum Wickeln des Filaments (4) um die Spule (110), vorzugsweise eine Metallspule, wobei der Durchmesser der Spule (110) im Leerzustand größer oder gleich 100 mm ist.

5. Anlage zum Aufwickeln eines Filaments (4) auf eine Spule (110) nach Anspruch 4, wobei die Einrichtung (18) zum Erhitzen und Halten des Filaments auf einer Temperatur von mindestens 70 °C zwischen der Streckeinrichtung (14) und der Wickeleinrichtung (27) angeordnet ist.

6. Anlage zum Aufwickeln eines Filaments auf eine Spule nach Anspruch 4 oder 5, wobei die Streckeinrichtung (14) ein Abzugsband (14) umfasst.

7. Anlage zum Aufwickeln eines Filaments auf eine Spule nach einem der Ansprüche 4 bis 6, wobei die Einrichtung (18) zum Erhitzen des Filaments eine Einrichtung (20) zum Einblasen von Luft mit der genannten Temperatur umfasst.

8. Anlage zum Aufwickeln eines Filaments auf eine Spule nach einem der Ansprüche 4 bis 7, wobei die Einrichtung (18) zum Erhitzen des Filaments eine Infrarot-Heizeinrichtung (22) umfasst.

9. Anlage zum Aufwickeln eines Filaments auf eine Spule nach einem der Ansprüche 4 bis 8,
wobei die Antriebseinrichtung (24) mindestens eine Antriebsrolle (26) umfasst.

## Claims

1. Method for winding a filament (4) for an additive manufacturing device comprising the steps of:
providing a filament (4) filled with at least 80% metal powder by mass;
- heating said filament (4) up to a temperature of at least 70°C and keeping said filament (4) at said temperature;
- winding said filament (4) around the axis of a coil (110), preferably metallic, the diameter of the coil (110) being in the empty state larger than or equal to a diameter of 100 mm.

2. Method for winding a filament (4) according to claim 1, wherein said diameter of the coil is comprised between 100 and 140 mm, preferably between 120 and 140 mm.

3. Method for winding a filament according to one of the preceding claims, wherein said filament (4) is heated to a temperature comprised between 70 and 140°C, preferably between 70 and 90°C.

4. Installation (8) for winding a filament (4) onto a coil (110) for an additive manufacturing device comprising:
- a filament (4) extruder (12);
- stretching means (14);
- means (18) for heating and keeping said filament (4) at a temperature of at least 70°C;
- drive means (24);
- means (27) for winding said filament (4) around the coil (110), preferably metallic, the diameter of the coil (110) of which in the empty state is larger than or equal to a diameter of 100 mm.

5. Installation for winding a filament (4) onto a coil (110) according to claim 4, wherein the means (18) for heating and keeping said filament at a temperature of at least 70°C intervene between the stretching means (14) and the winding means (27).

6. Installation for winding a filament onto a coil according to claim 4 or 5, wherein the stretching means (14) comprise a drawing belt (14).

7. Installation for winding a filament onto a coil according to one of claims 4 to 6, wherein the means (18) for heating said filament comprise means for blowing air at said temperature (20).

8. Installation for winding a filament onto a coil according to one of claims 4 to 7, wherein the means (18) for heating said filament include an infrared heating means (22).

9. Installation for winding a filament onto a coil according to one of claims 4 to 8, wherein the drive means (24) include at least one drive roller (26).
